(19) Europäisches Patentamt / European Patent Office / Office européen des brevets

(11) **EP 2 019 973 B1**

(12) **EUROPÄISCHE PATENTSCHRIFT**

(45) Veröffentlichungstag und Bekanntmachung des Hinweises auf die Patenterteilung:
**22.11.2017 Patentblatt 2017/47**

(21) Anmeldenummer: **07725096.7**

(22) Anmeldetag: **11.05.2007**

(51) Int Cl.:
**G01S 17/89** (2006.01)    **G01S 17/10** (2006.01)
**G01S 7/487** (2006.01)    **G01S 7/486** (2006.01)
**G01S 7/497** (2006.01)

(86) Internationale Anmeldenummer:
**PCT/EP2007/004176**

(87) Internationale Veröffentlichungsnummer:
**WO 2007/134730 (29.11.2007 Gazette 2007/48)**

(54) **DISTANZMESSVERFAHREN UND DISTANZMESSER ZUR ERFASSUNG DER RÄUMLICHEN ABMESSUNG EINES ZIELES**

DISTANCE MEASURING METHOD AND DISTANCE METER FOR DETERMINING THE SPATIAL DIMENSION OF A TARGET

PROCÉDÉ DE MESURE DE DISTANCES ET APPAREIL DE MESURE DE DISTANCES DESTINÉS À L'ENREGISTREMENT DES DIMENSIONS SPATIALES D'UNE CIBLE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **23.05.2006 EP 06114399**

(43) Veröffentlichungstag der Anmeldung:
**04.02.2009 Patentblatt 2009/06**

(73) Patentinhaber: **Leica Geosystems AG**
**9435 Heerbrugg (CH)**

(72) Erfinder:
• **ROHNER, Marcel**
  **CH-9410 Heiden (CH)**
• **AEBISCHER, Beat**
  **CH-9435 Heerbrugg (CH)**
• **JENSEN, Thomas**
  **CH-9400 Rorschach (CH)**
• **SIERCKS, Knut**
  **CH-9402 Mörschwill (CH)**

(74) Vertreter: **Kaminski Harmann Patentanwälte AG**
**Landstrasse 124**
**9490 Vaduz (LI)**

(56) Entgegenhaltungen:
EP-A2- 0 703 465    DE-A1- 10 162 668
US-A- 4 816 669    US-A- 5 892 575
US-A- 6 115 112    US-B2- 6 535 275

• NICLASS C ET AL: "A CMOS 3D camera with millimetric depth resolution" CUSTOM INTEGRATED CIRCUITS CONFERENCE, 2004. PROCEEDINGS OF THE IEEE 2004 ORLANDO, FL, USA OCT. 3-6, 2004, PISCATAWAY, NJ, USA,IEEE, 3. Oktober 2004 (2004-10-03), Seiten 705-708, XP010742419 ISBN: 0-7803-8495-4 in der Anmeldung erwähnt

**Beschreibung**

Die Erfindung betrifft ein Distanzmessverfahren zur Erfassung der räumlichen Abmessung wenigstens eines Zieles nach dem Oberbegriff des Anspruchs 1 und einen entsprechenden Distanzmesser nach dem Oberbegriff des Anspruchs 8.

Für die Aufnahme von Eigenschaften definierter Punkte in einer Messumgebung, insbesondere von Daten mit räumlichem Bezug, sind seit der Antike eine Vielzahl von Messvorrichtungen bekannt. Als räumliche Standarddaten werden dabei der Ort eines Messgerätes nebst evtl. vorhandener Referenzpunkte, sowie Richtung, Entfernung und Winkel zu Zielen und Messpunkten aufgenommen.

Ein allgemein bekanntes Beispiel für solche Messvorrichtungen stellt der Theodolit dar. In der zweidimensionalen Darstellung des optischen Bildes können Punkte festgelegt werden, zu denen eine Vermessung, d.h. die Bestimmung von Entfernung und/oder Winkel erfolgt. Anhand der Abbildung können mit Verfahren der Bildverarbeitung Ziele identifiziert und verfolgt werden, so dass eine automatisierte Vermessung auf dieser Basis grundsätzlich möglich ist.

Jedoch besitzt dieses Bild keinerlei Tiefeninformation, so dass die Bildverarbeitungsverfahren auf entsprechende Vorinformationen, Bildaufnahmebedingungen, wie z.B. der Vorausrichtung einer Zielmarke, oder Bildeigenschaften, wie z.B. Helligkeit und Kontrast, angewiesen sind. Die Möglichkeiten der Zielidentifikation und -verfolgung werden durch die rein visuelle Erfassung limitiert. Insbesondere können optische Mehrdeutigkeiten nicht aufgelöst werden, wie sie beispielsweise bei gekrümmten Oberflächen auftreten. So können in einer frontalen Aufnahme unter ungünstigen Lichtverhältnissen eine Scheibe und eine Kugel in beiden Fällen als identisches Abbild erscheinen.

Für viele Anwendungen sind jedoch auch zusätzliche Informationen über die räumliche Ausdehnung von Objekten relevant, wobei nicht nur einzelne ausgewählte Punkte sondern die flächenhafte Gestalt des Objektes von Interesse ist. Dies gilt beispielsweise für die Sicherheitstechnik, wo nebst einer Objektdetektion oft auch eine Objekterkennung erforderlich ist, um geeignete Sicherheitsmassnahmen einzuleiten. Weitere Anwendungen finden sich im industriellen Bereich beispielsweise in der Qualitätskontrolle in der Fertigung und in der Fahrzeugsicherheitstechnik.

Im Stand der Technik existieren verschieden Ansätze zur Erfassung der räumlichen Abmessungen bzw. der Gestalt von Objekten. Zur Entfernungsmessung wird ein zumeist optisches Signal vom Meßsystem in Richtung des zu vermessenden Objektes gerichtet und ein Teil des vom Objekt reflektierten Licht von den optischen Sensoren des Meßsystems erfaßt und verarbeitet. Aus der Phasenverschiebung oder der Signallaufzeit von der optischen Quelle des Meßsystems zum Objekt und zurück zu den Sensoren, kann auf die Entfernung des jeweiligen Meßpunktes geschlossen werden.

Hierzu wird mit Hilfe eines einzelnen und hinsichtlich des Strahlgangs abtastend bewegten Entfernungsmessers oder einer Vielzahl von Entfernungsmessern, welche in einer Linie oder in einem Array oder in einer anderen der Applikation angepaßten Geometrie angeordnet sind, die Entfernung zu mehreren Punkten des Objekts sequentiell bzw. simultan gemessen, so dass aus den gewonnenen Meßdaten die Objektgeometrie rekonstruiert werden kann.

Systeme mit einem abtastend geführten Strahl weisen Nachteile auf, die aus dem mechanischen Aufbau resultieren. Entweder muss das gesamte Gerät über den aufzunehmenden Sichtbereich bewegt werden oder es muss die Strahlführung bei ansonsten unveränderlicher Vorrichtung variabel gestaltet werden. Neben dem Aufwand für solche mechanisch und/oder optisch anspruchsvollen bzw. komplexen Lösungen weisen diese meist eine nur geringe Abtastgeschwindigkeit auf und besitzen darüber hinaus einen vergleichsweise hohen Energieverbrauch. Aufgrund der abtastenden Bewegung und mechanischer Belastungen, z.B. durch Vibrationen, ist die Korrelation der Entfernungsmessungen mit den Bildpunkten des visuellen Bildes nicht oder nur mit zusätzlichem Aufwand zu gewährleisten.

Eine parallelisierte Datenaufnahme, d.h. die gleichzeitige Messung zu mehreren oder vielen Meßpunkten, basiert auf einer gleichzeitigen Durchführung von mehreren Meßvorgängen, welche auch die Vervielfältigung von Komponenten erfordert, z.B. durch die Verwendung mehrerer Entfernungsmesser. Vorteilhafte Lösungen nutzen eine Integration der Sensoren in einem ASIC, wodurch ein geringer Assemblierungsaufwand der Systemkomponenten und eine optimierte Fertigung ermöglicht werden.

Der parallele Ansatz kann dabei auch durch einen scannenden Mechanismus unterstützt werden, womit die laterale Punktdichte erhöht werden kann, oder welcher auch erlaubt, mit einer Linienanordnung der Sensoren ein Objekt in allen räumlichen Dimensionen abzutasten. Dieser Mechanismus kann beispielsweise auf einer elektrooptischen Strahlablenkung, einer mechanischen Strahlablenkung mittels Spiegel oder einer manuellen Strahlablenkung in Kombination mit einem Inertialsensor zur Richtungsbestimmung ausgeführt sein.

Durch die Parallelisierung der Messung werden gegenüber einer Einzelpunktmessung an die Lichtquelle erhöhte Anforderungen gestellt, wenn z.B. vergleichbare Anforderungen an den Meßbereich und die Meßunsicherheit vorausgesetzt werden. Zudem ist eine hochgradige Parallelisierung, nur mit einem Meßkonzept technisch sinnvoll zu erreichen, dessen Realisierung eine geringe Komplexität aufweist.

Beispielsweise verwendet der in der DE 44 40 613 geoffenbarte Ansatz von LEDs emittiertes, sinusförmig moduliertes Licht zur Entfernungsmessung. Die in einem Array angeordneten Sensoren tasten das vom Objekt reflektierte Licht mit wenigstens 4 Abtastzeitpunkten ab. Aus diesen wird durch einfache Arithmetik der Phasenunterschied zwischen emittiertem und vom Objekt reflektiertem optischen Signal bestimmt. Die Berechnung der Phase erfolgt nach Auslesen der Abtastwerte ausserhalb des Sensor-Arrays. Bei Kenntnis der Wellenlänge der Lichtmodulation, kann von der gemessenen Phase auf die Entfernung zum Messpunkt geschlossen werden.

Durch die Beschränkung auf einige wenige Abtastpunkte und dem Verzicht auf Berechnungen in den Sensoren weisen diese eine geringe Komplexität auf. Allerdings weisen Entfernungsmesser mit sinusförmig moduliertem Licht eine schlechte Sensitivität aus, was die Verwendung des Systems auf nahe liegende Objekte oder einen geringen Parallelisierungsgrad beschränkt.

In ähnlicher Weise wird in der DE 197 04 496 die relative Phase eines rückgestreuten Signals bezüglich der Phase eines sinusförmig modulierten Lichtsignals durch Detektion mit sogenannten Photomischdetektoren bestimmt. Hierbei bewirkt der Lichtsensor eine Demodulation des empfangenen Lichts. Durch Anwendung dieser Demodulation bei verschiedenen Phasenbeziehungen zwischen dem emittierten Lichtsignal und dem Demodulationssignal kann die Phase zwischen dem emittierten Lichtsignal und dem empfangenen Lichtsignal, und damit die Objektentfernung, bestimmt werden. Wiederum wird durch die Verwendung von sinusförmig moduliertem Licht eine schlechte Sensitivität erreicht.

Aus Brian Aull, "3D Imaging with Geiger-mode Avalanche Photodiodes", Optics & Photonics News, May 2005, pp. 42ff, ist ein Konzept bekannt, das von einem Laser emittiertes, gepulstes Licht zur Entfernungsmessung verwendet. Die rückgestreuten Photonen werden in Single-Photon-Detektoren als lichtsensitive Elemente erfaßt. Die Ankunftszeit dieser Photonen ist das Mass für die Entfernung zum jeweiligen Objektpunkt. Dabei wird diese Ankunftszeit dadurch bestimmt, dass ein schnell laufender digitaler Zähler oder mehrere phasenverschobene Zähler bei Detektion des Photons gestoppt werden. Diese Zähler weisen einen relativ geringen Komplexitätsgrad auf. Zudem ist die Messung durch Verwendung von gepulstem Licht sehr sensitiv. Jedoch erreichen digitale Zähler eine schlechte Auflösung, welche durch das Clock-Intervall festgelegt wird. Das Verfahren ist deshalb für Präzisionsmessungen nicht geeignet.

In C. Niclass, A. Rochas, P.A. Besse, E. Charbon, "A CMOS 3D Camera with Millimetric Depth Resolution", IEEE Custom Integrated Circuits Conference, pp. 705-708, Oct. 2004, wird ein ähnliches Verfahren geoffenbart. Jedoch wird eine höhere zeitliche Auflösung durch Verwendung von Time-to-Digital Convertern (TDC) erreicht, welche die Photon-Ankunftszeit innerhalb des Clock-Intervalls interpolieren. Die hohe Komplexität des TDCs erlaubt aber nicht die Verwendung eines dedizierten TDCs für jedes Sensorelement. Deshalb erfaßt ein einzelner TDC die Ankunftszeit des ersten Photons von einer grösseren Menge von Sensoren erfaßten Photonen. Alle nachfolgend detektierten Photonen können nicht vom TDC erfaßt werden und gehen daher verloren. Dies stellt eine starke Einschränkung für die Sensitivität des Systems dar.

In der US 6,115,112 wird ein Distanzmeßgerät beschrieben, welches die Flugzeit gepulsten Laserlichts bestimmt, um die Distanz zu einem Objektpunkt abzuleiten. Die Messung wird unterteilt in eine Grobmessung und in eine Feinmessung. Während der Grobmessung werden starke optische Pulse emittiert, so dass sich das empfangene, vom Objekt rückreflektierten Signal klar vom vorhandenen Rauschen unterscheidet. In der Grobmessung wird die Distanz zum Objektpunkt grob bestimmt. In der darauf folgenden Feinmessung wird das Meßsignal - oder ein daraus abgeleitetes Meßprodukt - in der Umgebung des während der Grobmessung bestimmten Zeitpunkts abgetastet und weiter bearbeitet. Das Verfahren eignet sich nicht für eine parallelisierte Messung mit mehreren Sensoren, da das Erfordernis, dass sich das rückgestreute Signal während der Grobmessung klar vom Rauschen unterscheidet, praktisch nur mit grossen Pulsenergien und damit sehr aufwendigen optischen Quellen zu erreichen ist. In der US 6 535 275 B2 und in der DE 101 62 668 A1 werden auch Distanzmessverfahren und Distanzmesser nach dem Pulslaufzeitprinzip beschrieben.

Die Aufgabe der vorliegenden Erfindung besteht in der Bereitstellung eines verbesserten Verfahrens bzw. einer solchen Vorrichtung zur räumlichen Vermessung von Objekten, insbesondere zur Vermessung über grössere Entfernungen und mit erhöhter Genauigkeit.

Eine weitere Aufgabe besteht in der Bereitstellung eines Entfernungsmessers mit einer Vielzahl von entfernungsmessenden Komponenten geringer Komplexität.

Diese Aufgaben werden erfindungsgemäss durch die Gegenstände der Ansprüche 1 und 8 sowie durch die Merkmale der Unteransprüche gelöst bzw. die Lösungen fortgebildet. Der Erfindung liegt die stufenweise zeitliche Verkürzung des zur Messung verwendeten Zeitintervalls bei gleichzeitig gleichbleibender Zahl von Teilintervallen $t_{i,j}$ zugrunde.

In der hier beispielhaft dargestellten Realisierungsform wird zur Messung der Distanz zu einzelnen Punkten auf der Oberfläche eines zu vermessenden Objektes elektromagnetische Strahlung, vorzugsweise Laserlicht, in Pulsform auf dieses Objekt emittiert. Das reflektierte Licht wird wieder empfangen und dessen zeitliche Charakteristik zur Laufzeitbestimmung des Pulses ausgewertet. Dabei wird der Empfangszeitpunkt des reflektierten Pulses anhand der Identifikation der zeitlichen Position der Signalflanke bestimmt. Der Empfänger registriert hierzu die innerhalb eines Messintervalls einfallende Strahlung, wobei das Messintervall unter Berücksichtigung der Pulsform und Pulsdauer hinsichtlich Intervalldauer und zeitlicher Positionierung so gesetzt wird, dass eine Eindeutigkeit bei der Pulsidentifikation gewährleistet ist. Zur Ableitung dieses Zeitpunktes wird das Messintervall $T_i$ in mehrere Teilintervalle $t_{i,j}$ unterteilt und der Eingang des Pulses einem oder mehreren der Teilintervalle $t_{i,j}$ zugeordnet.

Erfindungsgemäss erfolgt die Bestimmung der Distanz zu einem Messpunkt in mehreren Stufen oder Phasen *Pi,* wobei die Genauigkeit der Entfernungsmessung durch Veränderung der zeitlichen Parameter sukzessive erhöht wird.

Vorrichtungsseitig weist hierfür jeder Sensor eine Anzahl von *M* Speichern auf, welche hier mit *Mj, j=1..M* bezeichnet werden, wobei dies erfindungsgemäss sowohl analoge, als auch digitale Speicher sein können. Die Zahl der Speicher kann verhältnismäßig klein gewählt werden - beispielsweise *M* = 5 - um auch die Komplexität eines Sensorelements gering zu halten. Jedem dieser Speicher wird ein Teilintervall $t_{i,j}$ des gesamten Meßintervalls $T_i$ dynamisch zugeordnet, wobei die Teilintervalle $t_{i,j}$ grundsätzlich mit gleicher Dauer gewählt werden. Allerdings sind erfindungsgemäss auch Teilintervalle $t_{i,j}$ unterschiedlicher Dauer innerhalb des Meßintervalls $T_i$ realisierbar. Eine optische Quelle emittiert Lichtpulse, die beispielsweise eine maximale Pulsdauer entsprechend der eines der Teilintervalle $t_{i,j}$ aufweisen können, wobei die Pulsrepetitionsrate bei Verkürzung des Meßintervalls $T_i$ erhöht werden kann. Jeder Speicher integriert die vom Objekt rückgestreute und von einem optischen System gesammelte Lichtintensität, während des ihm zugeordneten Zeitintervalls, so daß jeder Speicher die während seines Teilintervalls $t_{i,j}$ empfangene Lichtenergie repräsentiert. Diese Messung der Lichtenergie kann innerhalb einer Phase auch mehrfach erfolgen, falls der Signal-zu-Rauschabstand des empfangenen Signals dies erfordert. Die Anzahl der Wiederholungen kann auch den Meßbedingungen adaptiv angepaßt werden, um somit die Meßrate innerhalb der vorgegebenen Meßgenauigkeiten zu optimieren.

Nach Abschluß der Stufe $P_i$ wird dasjenige Speicherelement $M_{max}$ bestimmt, welches die größte Menge an Lichtenergie akkumuliert hat, beispielsweise $M_3$. Das gesamte Meßintervall $T_{i+1}$ für die nachfolgende Stufe $P_{i+1}$ wird daraufhin auf die zeitliche Dauer der Teilintervalle $t_{i,max-1}$ und $t_{i,max}$ bzw. $t_{i,2}$ und $t_{i,3}$ reduziert, welche während Stufe $P_i$ den Speichern $M_{max-1}$ und $M_{max}$ zugeordnet waren. Durch diese zunehmende Reduktion des Meßintervalls wird die zeitliche Position des optischen Signals mit zunehmender Genauigkeit bekannt.

In der letzten Stufe $P_E$ stellt der Inhalt der Speicher $M_1$-$M_M$ Abtastpunkte des optischen Signals dar, welche auch mit einem geeigneten Algorithmus ausserhalb der Sensoranordnung, die Bestimmung der zeitlichen Pulsposition mit einer höheren Auflösung als dies den Meßintervallen entspricht, ermöglicht.

Es kann von Vorteil sein, die Sendeform des emittierten Lichts der Länge der Meßintervalle anzupassen. Wie bereits dargestellt wird beispielsweise die Dauer der Lichtemission gleich gross gewählt, wie die Länge der den Speichern zugeordneten Meßintervalle. Zudem kann die Pulsrepetitionsrate bei Verkleinerung des Meßintervalls erhöht werden, ohne Eindeutigkeitsprobleme zu erzeugen. Ebenso kann die Meßzeit den herrschenden Signalverhältnissen adaptiv angepaßt werden.

Für jeden ausgesandten Puls empfangen konventionelle lineare Entfernungsmesser normalerweise eine Vielzahl von Signalphotonen. Im Idealfall ist dabei die Zahl N der Photonen gross genug um das Rauschen der Entfernungsmessungen hinreichend klein werden zu lassen. Bei Einzelphotondetektoren bzw. SPAD-Detektoren wird pro Puls nur ein einzelnes Photon detektiert, wobei diese Einschränkung allerdings auch umgangen werden kann, wenn der Detektor situationsabhängig im linearen Mode betrieben wird, was allerdings technisch einen erhöhten Aufwand bedeutet. Wie in M. Rohner et al, "Single-Photon Detection for High Precision Ranging - A Trade-off Study", First Range Image Research Day 2005, ETH Zürich, Switzer*land,* beschrieben ist deshalb die Wahrscheinlichkeit, ein frühes Photon zu detektieren höher als die Wahrscheinlichkeit ein spätes Photon zu registrieren, falls mehrere Photonen den Detektor erreichen. Somit kann es sowohl aufgrund der Hintergrund wie auch der Signalphotonen zu Verzerrungen des Signals kommen. Für einen gaussförmigen optischen Puls einer Gesamtenergie von $Q_r$, einer Pulslänge von $\sigma_p$ (FWHM $\approx 2.355 \cdot \sigma_p$) und einer Ankunftsrate $E$ der Hintergrundphotonen als Intensität des Hintergrundlichts folgt eine totale Dichte der ankommenden Photonen von

$$r(t) = \frac{I(t)}{h\nu} = \frac{Q_r}{h\nu} \frac{1}{\sqrt{2\pi} \cdot \sigma_p} e^{-(t-\tau)^2/(2\sigma_p^2)} + E \qquad (1)$$

Hieraus resultiert eine Detektionswahrscheinlichkeit von

$$P_n\left(t; r(t)\right) = \exp\left(-\frac{1}{2} \frac{\eta_0 \cdot Q_r}{h\nu}\left[\mathrm{erf}\left(\frac{t-\tau}{\sqrt{2} \cdot \sigma_p}\right) + 1\right] - t \cdot \eta_0 \cdot E\right) \qquad (2)$$

wo der Einfachheit halber $-\mathrm{erf}\left(\dfrac{-\tau}{\sqrt{2} \cdot \sigma_p}\right)$ durch 1 ersetzt werden kann, was für $\tau \gg \sigma_p$ in guter Näherung gilt. Gleichung (2) stellt damit ein mathematisches Signalmodell für den Verlauf des detektierten Signals als Funktion von Verzögerungszeit $\tau$, Pulsenergie $Q_r$, Pulslänge $\sigma_p$, Intensität des Hintergrundlichts $E$, Detektionsquanteneffizienz $\eta_0$, und Ein-

zelphotonenenergie *hv* dar. Das detektierte Signal folgt dem ursprünglichen Signalverlauf in Gleichung (1) nur für kleine Werte von $Q_r$ und $E$. Es ist deshalb für hohe Genauigkeitsanforderungen unerläßlich, die Verzögerungszeit $\tau$ unter Berücksichtigung der Signalverzerrungen in Gleichung (2) zu bestimmen. Dies kann z.B. durch Lösung eines nichtlinearen Optimierungsproblems gelöst werden. Hierbei wird die Pulslänge $\sigma_p$ typischerweise als durch eine Systemidentifikation bestimmt vorausgesetzt. Die Pulsenergie $Q_r$ wird als "Nuisance Parameter" zusammen mit der Verzögerungszeit $\tau$ geschätzt, während die Intensität des Hintergrundlichts, $E$, entweder durch Schätzung im Signalmodell (2) oder durch eine separate Messung bestimmt wird. Statt der drei Parameter $Q_r$, $E$, $\eta_0$ können auch direkt die zwei Kombinationen $\eta_0 \cdot Qr/(hv)$ und $\eta_0 \cdot E$ bestimmt werden.

Die Wahrscheinlichkeitsdichte (2) kann dabei nicht direkt ermittelt werden. Der mittlere Wert der Speicherzellen ist durch Integration von (2) über die entsprechenden Meßintervalle gegeben.

Um Meßfehler durch fehlerhafte Schätzwerte von $\sigma_p$ und $E$ zu minimieren, ist es vorteilhaft, in der letzten Meßphase den reflektierten Puls im gesamten Meßintervall zu zentrieren. Dies kann durch Interpolation der letzten Detektionsphase oder durch eine zusätzliche Meßphase geschehen.

Wenn während des Meßvorgangs Hintergrundstrahlung vorhanden ist, so wird diese ebenfalls als Rauschen detektiert. Wird das Meßintervall gegenüber der Hintergrundstrahlung hinreichend lang gewählt, wächst der Speicherwert des Speichers M, in dessen Zeitintervall ebenfalls das Meßsignal detektiert wird, über die Speicherwerte der anderen Speicher M hinaus. Dies ermöglicht unter Kenntnis des Speicherzeitraums gegenüber dem Sendezeitpunkt des Meßsignals eine einfache Laufzeitbestimmung des Meßsignals. Mit der so ermittelten Meßsignallaufzeit und der Kenntnis der Ausbreitungsgeschwindigkeit des Meßsignals über die Meßstrecke kann nach der elementaren Beziehung $R = c \cdot \tau/2$ die Distanz zum Meßobjekt ermittelt werden.

Im Gegensatz zum ersten Ausführungsbeispiel können bei linearen Detektoren - wie beispielsweise PIN-Photodioden, Avalanche-Photodetektoren, Photogates - analoge Speicher, d.h. Ladungsintegratoren, verwendet werden. Eine vorteilhafte Ausführungsform verwendet die Photogate und Charge-Transfer Technologie wie sie bspw. in DE 44 40 613 beschrieben ist.

Ein als in Analogtechnik ausgeführtes zweites Ausführungsbeispiel funktioniert in zur ersten Ausführungsform ähnlicher Weise, wobei der Einzelphotonendetektor durch einen linearen Detektor und die digitalen Speicherzellen durch analoge Speicher mit entsprechenden Auslesemöglichkeiten ersetzt werden.

Das erfindungsgemässe Verfahren und ein erfindungsgemässer Distanzmesser werden nachfolgend anhand von in der Zeichnung schematisch dargestellten Ausführungsbeispielen rein beispielhaft näher beschrieben oder erläutert. Im einzelnen zeigen

Fig.1a-c    die Darstellung von Ansätzen des Stands der Technik zur Erfassung der räumlichen Abmessung oder Gestalt von Objekten;

Fig.2    die Darstellung einer ersten Realisierungsvariante der Objektbeleuchtung für einen erfindungsgemässen Distanzmesser;

Fig.3    die Darstellung einer zweiten Realisierungsvariante der Objektbeleuchtung für einen erfindungsgemässen Distanzmesser;

Fig.4    die Darstellung einer dritten Realisierungsvariante der Objektbeleuchtung für einen erfindungsgemässen Distanzmesser;

Fig.5    die Darstellung eines Schaltbildes für ein Ausführungsbeispiel eines erfindungsgemässen Distanzmesser und

Fig.6    die Darstellung der Wahl von Mess- und Teilintervallen für ein Ausführungsbeispiel eines erfindungsgemässen Verfahrens.

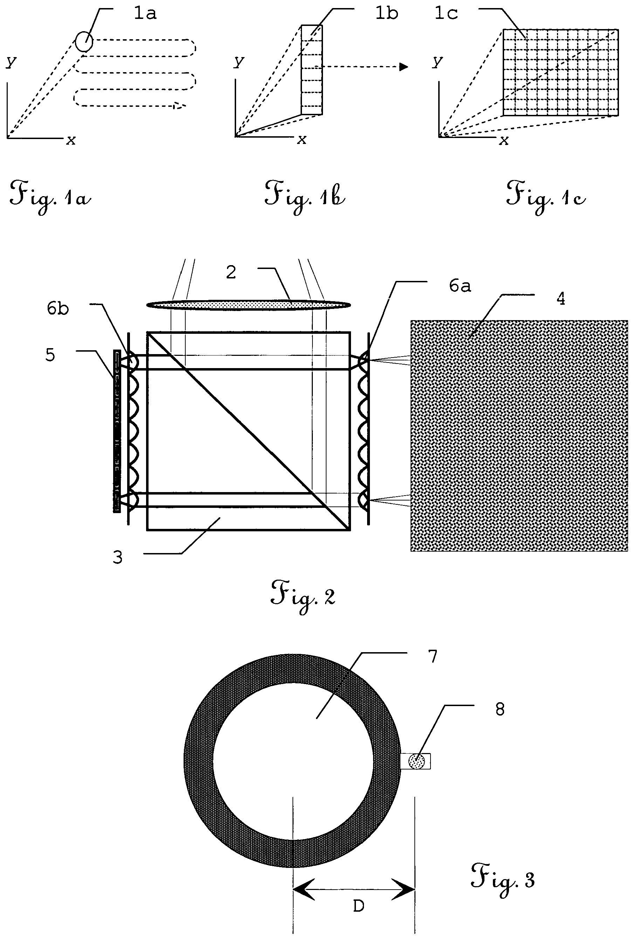

Fig.1a-c erläutern Ansätze des Stands der Technik zur Erfassung der räumlichen Abmessung oder Gestalt von Objekten. Zur Abtastung der Oberfläche eines Objekts müssen multiple Strahlgänge zu den vielen verschiedenen Punkten der Oberfläche verwirklicht werden.

Diese können - wie in Fig.1a gezeigt - durch das abtastende Bewegen eines einzigen Strahlgangs mit einer Apertur 1a erfolgen, welche jeweils nur einen einzigen Punkt gleichzeitig erfasst. Die Abdeckung des Objekts erfolgt vollständig sequentiell. Hierfür wird ein optisches Signal - beispielsweise von einem Laser erzeugt - durch einen Scanning-Mechanismus über das Objekt geführt und von einer Transmitter-Optik geeignet geformt. Ein Teil des vom Objekt reflektierten Lichts wird von der Apertur 1a einer Empfangsoptik empfangen und zu den optischen Sensoren des Meßsystems geführt. Aus der Signallaufzeit von der optischen Quelle des Meßsystems zum Objekt und zurück zu den Sensoren, kann auf die Entfernung des jeweiligen Meßpunktes geschlossen werden. Durch Synchronisation der Entfernungsmessung mit der Position des Scanners kann eine Rekonstruktion des Objektes in drei Dimensionen erzielt werden. Ein integriertes System zur Abbildung und Modellierung dreidimensionaler Objekte nach diesem Prinzip wird beispielsweise in der WO 97/40342 geoffenbart.

Die Anforderungen an ein abtastendes System mit Bewegung bzw. Veränderung des Strahlgangs können durch Parallelisierung der Entfernungsmessung stark reduziert werden. In einem Ansatz erfolgt die Elimination des gesamten Scanning-Mechanismus, so daß ein positiver Effekt auf Systemkosten, Gewicht, Zuverlässigkeit und Meßgeschwindigkeit folgen. Ein vollständig parallelisiertes System führt dann simultan für alle Bildpunkte eine Entfernungsmessung durch, d.h. die gesamte Distanzinformation wird zeitgleich aufgenommen. Diese Situation wird in Fig.1c gezeigt. Hier wird der gesamte Erfassungsbereich des Systems durch die individuellen Aperturen 1c der Bildpunkte abgedeckt.

Zwischen dem vollständig sequentiellen und dem vollständig parallelen Ansatz sind verschiedene Grade der Parallelisierung realisierbar, wie in Fig.1b exemplarisch für den Fall eines abtastenden Systems mit einer bewegten Zeile aus Sensoren mit zugeordneten Erfassungsbereichen 1b dargestellt. Die erfindungsgemässe Vorrichtung bzw. das erfindungsgemässe Verfahren betreffen insbesondere die Fälle einer linien- oder array-artigen Sensoranordnung, jedoch können erfindungsgemäss auch andersartige Ausführungen paralleler oder teilweise paralleler Systeme, wie z.B. hexagonale Strukturen, grob-fein Strukturen, realisiert werden.

In realen Systemen treten diverse Zeitdrifteffekte auf, die die Meßunsicherheit der Entfernungsmessung erhöhen. Dies kann beispielsweise durch zeit- und temperaturvariante Signalübertragungseigenschaften des Lasers oder der Detektoren verursacht sein. Deshalb ist für genaue Messungen im mm-Bereich eine parallele oder hinreichend oft wiederholte Nullpunkts-Kalibration während und/oder vor der Messung vorteilhaft. Typischerweise wird eine solche Kalibration durch Messung auf ein Referenztarget erreicht. Für den Linienscanner kann dies durch ein Referenztarget bei definierter Scannerposition erreicht werden oder durch Umschalten der optischen Wege. Im Falle einer flächenhaften Anordnung der Detektoren ist das Umschalten der optischen Wege auf ein Referenzziel möglich.

Erfindungsgemäss muss für eine Mehrzahl von Detektoren elektromagnetische Meßstrahlung zur Verfügung gestellt werden, die von diesen empfangen werden kann. Dabei kann grundsätzlich jeder Detektor über eine eigene Strahlungsquelle verfügen oder aber eine gemeinsame Strahlungsquelle für mehrere oder alle Sensoren bzw. Bildpunkte genutzt werden. Die Fig.2-4 zeigen verschiedene Realisierungsalternativen für eine Zielbeleuchtung mit nur einer einzigen Strahlungsquelle für alle Sensoren. Im Gegensatz zu klassischen laserbasierten Entfernungsmessern mit einem optischen Strahl mit angenähert punktförmigem Querschnitt wird hier der Strahlquerschnitt zu einer Linie oder einer Fläche aufgefächert. Dies kann zum einen flächendeckend durchgeführt werden, so daß die laterale Auflösung durch die Abbildung der photosensitiven Fläche auf das Objekt definiert wird. Andererseits kann auch das emittierte Licht als eine Linie oder Array von optischen Strahlen mit angenähert punktförmigem Querschnitt ausgeführt werden. Typischerweise ist in diesem Fall die laterale Auflösung durch den Sender und nicht durch die Detektoren definiert. Die grundlegende optische Architektur ist vergleichbar mit derjenigen von klassischen nichtparallelisierten Entfernungsmessern.

Fig.2 veranschaulicht eine erste Realisierungsvariante der Objektbeleuchtung für einen erfindungsgemässen Distanzmesser mit einer direkten Kopplung von Sende- und Empfangsstrahlen. Die von einer Strahlungsquelle erzeugte Meßstrahlung wird über eine Linse 2, einen Strahlteiler 3 und ein erstes Mikrolinsenarray 6a auf das zu vermessende Ziel 4 emittiert. Die zurückgestreute Meßstrahlung wird über das erste Mikrolinsenarray 6a und ein zweites Mikrolinsenarray 6b auf die Sensoren der Bildpunkte 5 geführt. Durch diese Ausgestaltung wird jedem Sensor bzw. Bildpunkt 5 ein eigener Strahlgang für Emission und Empfang zugeordnet, wobei parasitäre Reflexionen an den optischen Übergängen durch ein Time-gating eliminiert werden können.

In Fig.3 wird eine zweite Realisierungsvariante der Objektbeleuchtung für einen erfindungsgemässen Distanzmesser mit biaxialen Aufbau und off-axis-Beleuchtung dargestellt. Die Strahlquelle ist nun mit ihrer Sendeoptik 8 in biaxialer Anordnung mit einem Achsabstand D neben einer Linse 7 als optische Empfangsöffnung der Bildpunktanordnung angeordnet. Durch die vom Empfangsstrahlengang getrennte Strahlungsquelle wird das zu vermessende Ziel so ausgeleuchtet, dass die durch die Linse 7 erfaßte Strahlung auf alle Bildpunkte geführt werden kann.

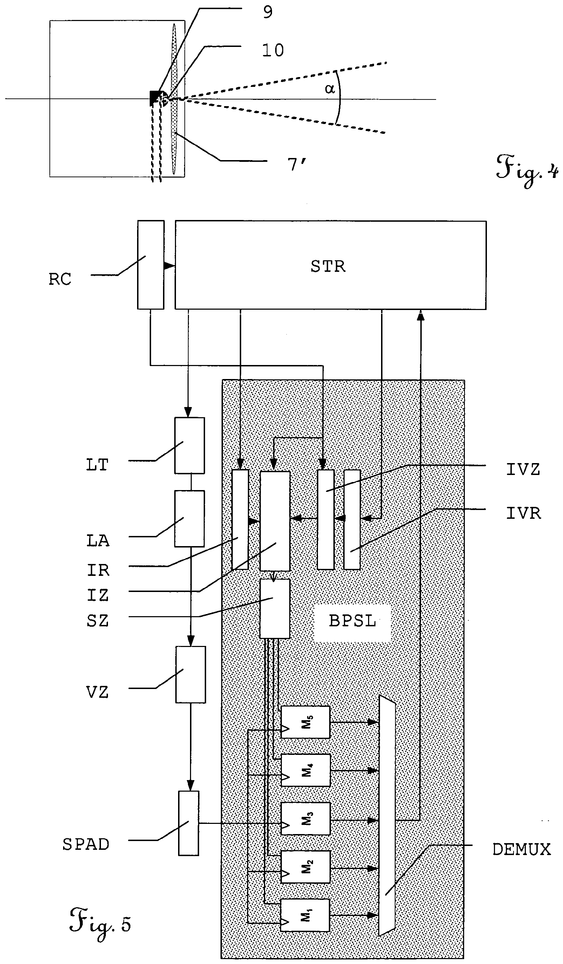

Fig.4 zeigt eine dritte Realisierungsvariante der Objektbeleuchtung mit koaxialem Aufbau. Die von der Strahlungsquelle erzeugte Messstrahlung wird über ein in der Empfängerachse angeordnetes Umlenkelement 9 und eine Sendeoptik 10 auf das zu vermessende Ziel emittiert. Durch die Wahl eines geeigneten Öffnungswinkels $\alpha$, z.B. von 15°, wird gewährleistet, dass der durch die Linse 7' als optische Empfangsöffnung definierte Erfassungsbereich der Sensoren vollständig ausleuchtbar ist.

In Fig.5 wird ein Ausführungsbeispiel eines erfindungsgemässen Distanzmessers anhand der Darstellung eines exemplarischen Schaltbildes erläutert. Eine von einer Steuerlogik STR über einen Lasertreiber LT angesteuerte Laserdiode LA emittiert eine Vielzahl von Laserpulsen über eine Verzögerungsstrecke VZ auf ein lichtempfindliches Element. Dabei wird die Verzögerungsstrecke VZ durch die Distanz von der Laserdiode LA zu einem zu vermessenden Ziel und zurück bis zum lichtempfindlichen Element definiert. Die Laserdiode LA wird so angesteuert, dass die erzeugten Lichtpulse in Pulsform und/oder Dauer veränderbar sind

Als lichtempfindliches Element wird in diesem Ausführungsbeispiel eine Anordnung von distanzmessenden Bildpunkten mit Einzelphotondetektor bzw. Single-Photon-Detektor SPAD zum Detektieren der vom Ziel zurückgestreuten Lichtpulse verwendet. Dieser erzeugt als elektrisches Ausgangssignal bei jeder Detektion eines Photons eine charakteristischen Verlauf, z.B. eine ansteigende Flanke, welche das Triggersignal für $M$ digitale Zähler in der Bildpunktsteuerlogik BPSL zum Ableiten einer Distanz zum Ziel für jeden der Bildpunkte, insbesondere nach dem Pulslaufzeitprinzip, darstellt. In der Bildpunktsteuerlogik BPSL werden diese Zähler durch Speicherzellen $M_1$-$M_5$ gebildet, deren Speicherinhalte ein Mass für die detektierte Lichtenergie innerhalb der assoziierten Teilintervalle darstellen. Dabei werden jedem Bildpunkt jeweils wenigstens zwei Speicherzellen - hier exemplarisch fünf Speicherzellen $M_1$-$M_5$ zugeordnet, welche jeweils ein zeitliches Teilintervall $t_{i,j}$ erfassen, so dass ein Messintervall $T_i$ zeitlich abgedeckt wird. Die Speicherzellen $M_1$-$M_5$ werden so geschaltet, dass das Detektieren in wenigstens zwei Stufen erfolgt, wobei das Messintervall $T_i$ von Stufe zu Stufe verkürzt wird. Hierzu selektiert ein Speicherzähler SZ die dem jeweiligen Zeitintervall zugehörige Speicherzelle $M_1$-$M_5$. Der Speicherzähler SZ wiederum wird erhöht - d.h. die nachfolgende Speicherzelle adressiert - sobald der durch eine zentrale Reference-Clock RC angesteuerter Intervallzähler IZ eine Anzahl Referenz-Zyklen durchlaufen hat, welche durch das Intervalllängenregister IR festgelegt wird. Der Intervallverzögerungszähler IVZ verzögert die Aktivierung der ersten Speicherzelle $M_1$ gegenüber dem Zeitpunkt der Lichtemission um den Wert des Intervallverzögerungsregisters IVR. Dies erlaubt die beliebige zeitliche Plazierung des Meßintervalls von Stufe $P_j$ relativ zur Pulsemissionszeit. Der Inhalt von Intervallregister IR und dem Intervallverzögerungsregister IVR wird nach jeder Meßphase von der Steuerlogik STR auf Grund der über einen Demultiplexer DEMUX ausgelesenen Inhalte der Speicherzellen $M_1$-$M_5$ neu gesetzt. die Steuerlogik STR kann zudem zur interpolierenden Bestimmung der zeitlichen Position eines detektierten Lichtpulses ausgebildet sein.

In der Verzögerungsstrecke VZ kann eine abbildende Optik integriert sein, deren optische Empfangsleistung automatisch mittels einer verstellbaren Pupilleneinstellung der Distanz zum Ziel anpaßbar ist, um im Mittel über alle Bildpunkte eine optimierte detektierbare Strahlungsintensität zu erzielen oder deren Tiefenschärfe zur Minimierung des Übersprechens zwischen den Bildpunkten der Distanz zum Ziel anpaßbar ist.

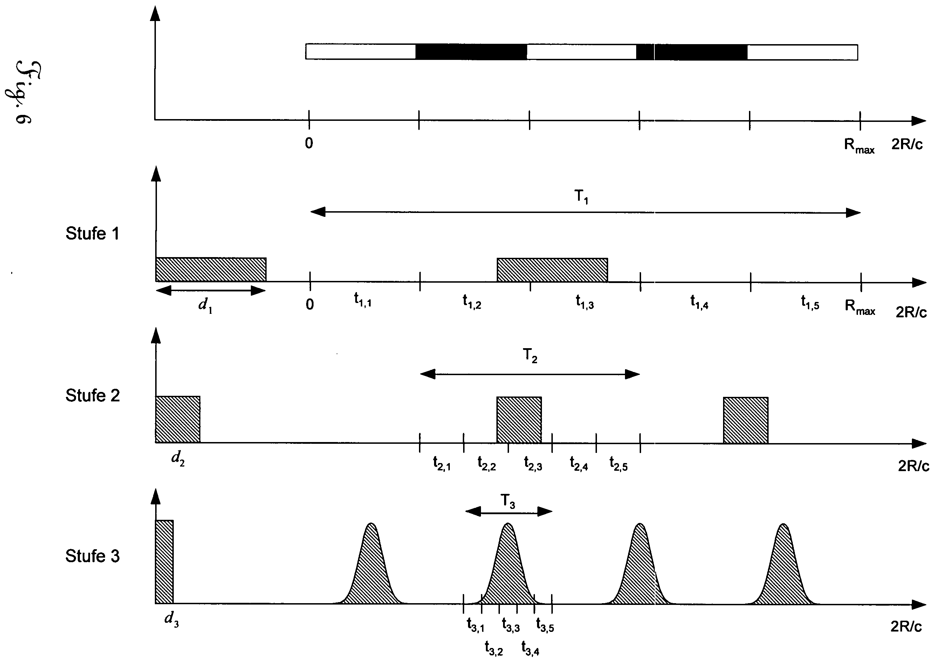

In Fig.6 erfolgt die erläuternde Darstellung der Wahl von Mess- und Teilintervallen für ein Ausführungsbeispiel eines erfindungsgemässen Verfahrens.

Beim Aussenden einer Vielzahl von Lichtpulsen auf das Ziel erfolgt ein Detektieren der vom Ziel zurückgestreuten Lichtpulse in mehreren Stufen und mittels einer Vielzahl von distanzmessenden Bildpunkten wobei die Distanz zum Ziel für jeden der Bildpunkte, insbesondere nach dem Pulslaufzeitprinzip, abgeleitet wird. Zur Vermeidung von Mehrdeutigkeiten beim Empfang der Lichtpulse müssen deren Repetitionsrate und das zeitliche Fenster für den Empfang so aufeinander abgestimmt sein, dass für ein in einer Maximaldistanz $R_{max}$ befindliches Ziel nur ein Lichtpuls innerhalb eines Messintervalls $T_1$ registriert werden kann. Die anfängliche Wahl des Messintervalls $T_1$ erfolgt somit unter Einhaltung dieser Bedingung. Ist die Grobdistanz des Zieles hingegen bekannt, so kann das Zeitfenster für das Messintervall $T_1$ verkürzt und zeitlich präziser gesetzt werden.

Jedes Messintervall $T_1$ wird in wenigstens zwei, insbesondere gleich lange, Teilintervalle $t_{1,j}$ unterteilt, wobei der Lichtpuls hinsichtlich seiner Dauer $d_1$ so auf die Unterteilung des Messintervalls $T_1$ abgestimmt emittiert wird, dass er durch zwei dieser Teilintervalle $t_{1,j}$ erfassbar ist. In diesem Ausführungsbeispiel wird das Messintervall $T_1$ in fünf gleich lange Teilintervalle $t_{1,1}$ bis $t_{1,5}$ unterteilt.

Erfindungsgemäss erfolgt das Detektieren in wenigstens zwei Stufen, wobei das Messintervall $T_1$ von Stufe 1 zu Stufe 2 bzw. in der Folge weiterer Stufen verkürzt wird, d.h. das Detektieren weist einen unter wenigstens einmaliger Wiederholung auf wenigstens zwei Stufen durchgeführten Erfassungsschritt auf, wobei das Messintervall $T_i$ von Stufe zu Stufe verkürzt wird. Dabei wird auf mehreren Stufen das Messprinzip des Erfassungsschrittes beibehalten und der Erfassuzngschritt wiederholt. Das für das Detektionsverfahren verwendete Messintervall wird somit bei gleichem Messprinzip Stufe für Stufe sukzessive verkürzt

Hierfür wird im Fall einer Detektion der vorderen Signalflanke für die Stufe 2 aus dem Messintervall $T_1$ der jeweils vorangehenden Stufe 1 der Zeitraum aus dem Teilintervall $t_{1,3}$ mit der höchsten detektierten Lichtenergie und dem zeitlich unmittelbar vorangehenden Teilintervall $t_{1,2}$ als verkürztes Messintervall $T_2$ gewählt. Für die Detektion der hinteren Signalflanke kann aus dem Messintervall Ti der jeweils vorangehenden Stufe i der Zeitraum aus dem Teilintervall $t_{i,max}$ mit der höchsten detektierten Lichtenergie und dem zeitlich unmittelbar folgenden Teilintervall $t_{i,max+1}$ als verkürztes Messintervall $T_{i+1}$ gewählt werden.

Zudem wird in Stufe 2 die maximale Dauer $d_2$ der Lichtpulse an die Teilintervalle $t_{2,j}$ angepasst, indem sie zeitlich durch die Dauer eines Teilintervalls $t_{2,j}$ begrenzt wird. Aufgrund der nun grob bekannten zeitlichen Lage des Empfangssignals kann auch die Repetitionsrate der Lichtpulse von Stufe zu Stufe erhöht werden.

Auf die Stufe 2 können noch weitere Stufen mit Verkürzungen der Messintervalle folgen, was zu einer fortschreitenden Genauigkeit in der Bestimmung der zeitlichen Lage des empfangenen Lichtpulses führt. In dieser Darstellung wird für die Stufe 3 aus dem Messintervall $T_2$ wiederum das Teilintervall $t_{2,3}$ mit der höchsten detektierten Lichtenergie identifiziert und dessen Zeitraum bildet zusammen mit dem des zeitlich unmittelbar vorangehenden Teilintervalls $t_{2,2}$

das verkürzte Messintervall $T_3$ der dritten Stufe, wobei auch in dieser Stufe 3 wiederum die zeitliche Dauer $d_3$ der emittierten Lichtpulse, wie auch deren Repetitionsrate, angepasst wird. Das Detektieren erfolgt somit in mehreren Stufen, wobei das Messintervall $T_i$ von Stufe zu Stufe so verkürzt wird, dass die Messintervalle $T_i$ verschiedener Stufen überlappen. Hierbei erfolgt zumindest ein Überlapp der Messintervalle $T_i$ aufeinanderfolgender Stufen, insbesondere jedoch ein Überlapp aller Messintervalle $T_i$, so dass diese einen in der relativen zeitlichen Lage gemeinsamen Bereich aufweisen, in dem der zu empfangende Lichtpuls lokalisiert wird.

Die dargestellten Ausführungsformen und Figuren stellen nur erläuternde Beispiele für erfindungsgemässe Realisierungen dar und sind daher nicht abschliessend und einschränkend zu verstehen. Insbesondere sind die Zahlen der dargestellten Bild- und Distanzpunkte bzw. der zugeordneten Strahlengänge und Speicherzellen bzw. Teilintervalle lediglich aus Darstellungsgründen gewählt worden.

**Patentansprüche**

1. Distanzmessverfahren zur Erfassung der räumlichen Abmessung wenigstens eines Zieles (4) mit wenigstens einem

   • Aussenden einer Vielzahl von Lichtpulsen, insbesondere Laserlicht, auf das Ziel (4);
   • Detektieren der vom Ziel (4) zurückgestreuten Lichtpulse mittels einer Vielzahl von distanzmessenden Bildpunkten (5);
   • Ableiten einer Distanz zum Ziel (4) für jeden der Bildpunkte (5), insbesondere nach dem Pulslaufzeitprinzip;

   wobei jeder Lichtpuls innerhalb eines Messintervalls ($T_i$) aus wenigstens zwei, insbesondere gleich langen, Teilintervallen ($t_{i,j}$) erfasst wird, **dadurch gekennzeichnet, dass**
   das Detektieren einen unter wenigstens einmaliger Wiederholung auf wenigstens zwei Stufen durchgeführten Erfassungsschritt aufweist, wobei das Messintervall ($T_i$) von Stufe zu Stufe verkürzt wird.

2. Verfahren nach Anspruch 1,
   **dadurch gekennzeichnet, dass** aus dem Messintervall ($T_i$) der jeweils vorangehenden Stufe (i) der Zeitraum aus dem Teilintervall ($t_{i,max}$) mit der höchsten detektierten Lichtenergie und

   - dem zeitlich unmittelbar vorangehenden Teilintervall ($t_{i,max-1}$) oder
   - dem zeitlich unmittelbar folgenden Teilintervall ($t_{i,max+1}$) als verkürztes Messintervall ($T_{i+1}$) gewählt wird.

3. Verfahren nach einem der vorangehenden Ansprüche,
   **dadurch gekennzeichnet, dass**
   die Repetitionsrate der Lichtpulse von Stufe zu Stufe erhöht wird.

4. Verfahren nach einem der vorangehenden Ansprüche,
   **dadurch gekennzeichnet, dass**
   die maximale Dauer der Lichtpulse von Stufe zu Stufe an die Teilintervalle ($t_{i,j}$) angepasst wird, insbesondere zeitlich durch die Dauer eines Teilintervalls ($t_{i,j}$) begrenzt wird.

5. Verfahren nach einem der vorangehenden Ansprüche,
   **dadurch gekennzeichnet, dass**
   Verzerrungen des zurückgestreuten Lichtpulses, insbesondere verursacht durch zu starke Signalpegel oder Hintergrundlicht, unter Verwendung eines nichtlinearen Modells für den Verlauf des detektierten Lichtpulses reduziert werden, insbesondere gemäss

$$P_n = \exp\left(-\frac{1}{2}\frac{\eta_0 \cdot Q_r}{h\nu}\left[erf\left(\frac{t-\tau}{\sqrt{2}\cdot\sigma_p}\right)+1\right]-t\cdot\eta_0\cdot E\right)$$

als Funktion von

   - Zeit t
   - Verzögerungszeit $\tau$,
   - Pulsenergie $Q_r$,

- Pulslänge $\sigma_p$,
- Intensität des Hintergrundlichts $E$,
- Detektionsquanteneffizienz $\eta_0$, und
- Einzelphotonenenergie $h\nu$.

6. Verfahren nach Anspruch 5,
   **dadurch gekennzeichnet, dass**
   die Verzögerungszeit $\tau$ aus $P_n$ bestimmt wird, insbesondere durch Lösung eines nichtlinearen Optimierungsproblems, bei dem

   - die Pulslänge $\sigma_p$ durch eine Systemidentifikation bestimmt und

   - die Pulsenergie $Q_r$ oder $\dfrac{\eta_0 \cdot Q_r}{h\nu}$ zusammen mit der Verzögerungszeit $\tau$ geschätzt und

   - die Intensität des Hintergrundlichts $E$ oder $\eta_0 \cdot E$ entweder durch Schätzung oder durch eine separate Messung bestimmt

   werden.

7. Verfahren nach einem der Ansprüche 5 oder 6,
   **dadurch gekennzeichnet, dass**
   in der letzten Stufe der zu detektierende Lichtpuls im Messintervall zentriert wird, um Fehler der Schätzwerte von Pulslänge $\sigma_p$ und Hintergrundlicht $E$ oder $\eta_0 \cdot E$ zu minimieren, insbesondere durch Interpolation in der letzten Stufe oder durch eine nachfolgende Meßphase.

8. Distanzmesser zur Erfassung der räumlichen Abmessung wenigstens eines Zieles mit wenigstens

   • einer Strahlquelle (LA) zum Aussenden einer Vielzahl von Lichtpulsen, insbesondere von Laserlicht, auf das Ziel (4);
   • einer Anordnung von distanzmessenden Bildpunkten (5) zum Detektieren der vom Ziel zurückgestreuten Lichtpulse;
   • einer Steuer- und Auswertekomponente zum Ableiten einer Distanz zum Ziel für jeden der Bildpunkte (5), insbesondere nach dem Pulslaufzeitprinzip;

   wobei jedem Bildpunkt (5) jeweils wenigstens zwei Speicherzellen ($M_1$, $M_2$, $M_3$, $M_4$, $M_5$) zugeordnet sind, welche jeweils ein zeitliches Teilintervall ($t_{i,j}$) erfassen, so dass ein Messintervall ($T_i$) zeitlich abgedeckt wird, **dadurch gekennzeichnet, dass**
   die Speicherzellen ($M_1$, $M_2$, $M_3$, $M_9$, $M_5$) so geschaltet werden, dass das Detektieren einen unter wenigstens einmaliger Wiederholung auf wenigstens zwei Stufen durchgeführten Erfassungsschritt aufweist, wobei das Messintervall ($T_i$) von Stufe zu Stufe verkürzt wird.

9. Distanzmesser nach Anspruch 8,
   **dadurch gekennzeichnet, dass**
   die Bildpunkte (5) als lineare Photodetektoren ausgebildet sind, insbesondere als Photogates, PIN-Diode oder Avalanche-Photodiode.

10. Distanzmesser nach Anspruch 9,
    **dadurch gekennzeichnet, dass**
    die Speicherzellen ($M_1$, $M_2$, $M_3$, $M_4$, $M_5$) die vom Ziel (4) zurückgestreute Lichtintensität der Lichtpulse während der zugeordneten Teilintervalle ($t_{i,j}$) integrieren, insbesondere als Charge-Transfer-Gates ausgebildet sind.

11. Distanzmesser nach Anspruch 8,
    **dadurch gekennzeichnet, dass**
    die Bildpunkte (5) als Einzelphotondetektoren (SPAD) ausgebildet sind.

12. Distanzmesser nach Anspruch 11,
    **dadurch gekennzeichnet, dass**
    die Speicherzellen ($M_1$, $M_2$, $M_3$, $M_4$, $M_5$) als digitale Zähler ausgebildet sind.

**13.** Distanzmesser nach einem der Ansprüche 9 bis 12,
**gekennzeichnet durch**
eine abbildende Optik, deren optische Empfangsleistung automatisch mittels einer verstellbaren Pupilleneinstellung der Distanz zum Ziel (4) anpaßbar ist, um im Mittel über alle Bildpunkte (5) eine optimierte detektierbare Strahlungsintensität zu erzielen.

**14.** Distanzmesser nach einem der Ansprüche 8 bis 13,
**dadurch gekennzeichnet, dass**
die Strahlungsquelle (LA) so ausgebildet ist, dass die Lichtpulse in Pulsform und/oder Dauer veränderbar sind.

**15.** Distanzmesser nach einem der Ansprüche 8 bis 14,
**dadurch gekennzeichnet, dass**
die Steuer- und Auswertekomponente zur interpolierenden Bestimmung der zeitlichen Position eines detektierten Lichtpulses ausgebildet ist.

**16.** Distanzmesser nach einem der Ansprüche 8 bis 15,
**gekennzeichnet durch**
eine abbildende Optik, deren Tiefenschärfe zur Minimierung des Übersprechens zwischen den Bildpunkten (5) der Distanz zum Ziel (4) anpaßbar ist.

**17.** Distanzmesser nach einem der Ansprüche 8 bis 16,
**dadurch gekennzeichnet, dass**
jedem Bildpunkt (5) ein eigener Strahlgang für das Aussenden und Detektieren der Lichtpulse zugeordnet ist, insbesondere mit einem Strahlteiler (3) einem ersten Mikrolinsenarray (6a) und einem zweiten Mikrolinsenarray (6b).

**Claims**

**1.** Distance measuring method for determining the spatial dimension of at least one target (4), comprising at least

- emission of a multiplicity of light pulses, in particular laser light, to the target (4);
- detection of the light pulses scattered back by the target (4) by means of a multiplicity of distance-measuring pixels (5);
- derivation of a distance to the target (4) for each of the pixels (5), in particular according to the pulse transit time principle;

each light pulse being detected within a measuring interval ($T_i$) comprising at least two, in particular equally long, part-intervals ($t_{i,j}$),
**characterized in that** the detection comprises a detection step carried out with at least one repetition in at least two stages, the measuring interval ($T_i$) being shortened from stage to stage.

**2.** Method according to Claim 1, **characterized in that** the period from the part-interval ($t_{i,max}$) with the highest detected light energy and

- the immediately preceding part-interval ($t_{1,max-1}$) or
- the immediately following part-interval ($t_{i,max+1}$) is chosen as shortened measuring interval ($T_{i+1}$) from the measuring interval ($T_i$) of the respective preceding stage ($i$).

**3.** Method according to either of the preceding claims, **characterized in that** the repetition rate of the light pulses is increased from stage to stage.

**4.** Method according to any of the preceding claims, **characterized in that** the maximum duration of the light pulses is adapted from stage to stage to the part-intervals ($t_{i,j}$), in particular is limited with respect to time by the duration of a part-interval ($t_{i,j}$).

**5.** Method according to any of the preceding claims, **characterized in that** distortions of the backscattered light pulse, in particular caused by an excessively high signal level or background light, are reduced with the use of a non linear model for the variation of the detected light pulse, in particular according to

$$P_n = \exp\left(-\frac{1}{2}\frac{\eta_0 \cdot Q_r}{h\nu}\left[erf\left(\frac{t-\tau}{\sqrt{2}\cdot\sigma_p}\right)+1\right]-t\cdot\eta_0\cdot E\right)$$

as a function of

- time $t$,
- lag time $\tau$,
- pulse energy $Q_r$,
- *pulse length $\sigma_p$*,
- intensity of the background light $E$,
- detection quantum efficiency $\eta_0$, and
- single-photon energy $h\nu$.

6. Method according to Claim 5, **characterized in that** the lag time $\tau$ is determined from $P_n$, in particular by solving a non linear optimisation problem, in which

   - the pulse length $\sigma_p$ is determined by a system identification and

   - the pulse energy $Q_r$ or $\dfrac{\eta_0 \cdot Q_r}{h\nu}$ is estimated

   together with the lag time $\tau$ and
   - the intensity of the background light $E$ or $\eta_0 \cdot E$ is determined either by estimation or by a separate measurement.

7. Method according to either of Claims 5 and 6, **characterized in that**, in the last stage, the light pulse to be detected is centred in the measuring interval in order to minimise errors of the estimated values of pulse length $\sigma_p$ and background light $E$ or $\eta_0 \cdot E$, in particular by interpolation in the last stage or by a subsequent measuring phase.

8. Rangefinder for determining the spatial dimension of at least one target, comprising at least

   • a beam source (LA) for emitting a multiplicity of light pulses, in particular of laser light, to the target (4);
   • an arrangement of distance-measuring pixels (5) for detecting the light pulses scattered back by the target;
   • a control and evaluation component for deriving a distance to the target for each of the pixels (5), in particular according to the pulse transit time principle;
   • in each case at least two memory cells ($M_1$, $M_2$, $M_3$, $M_4$, $M_5$) being assigned to each pixel (5), which memory cells in each case determine a part-interval ($t_{i,j}$), as a function of time so that a measuring interval ($T_i$) is covered with respect to time, **characterized in that** the memory cells ($M_1$, $M_2$, $M_3$, $M_4$, $M_5$) are connected so that the detection has a detection step carried out with at least one repetition in at least two stages, the measuring interval ($T_i$) being shortened from stage to stage.

9. Rangefinder according to Claim 8, **characterized in that** the pixels (5) are formed as linear photodetectors, in particular as photogates, PIN diodes or avalanche photodiodes.

10. Rangefinder according to Claim 9, **characterized in that** the memory cells ($M_1$, $M_2$, $M_3$, $M_4$, $M_5$) integrate, during the assigned part-intervals ($t_{i,j}$), the light intensity of the light pulses which is scattered back by the target (4), in particular are formed as charge-transfer gates.

11. Rangefinder according to Claim 8, **characterized in that** the pixels (5) are in the form of single-photon detectors (SPAD).

12. Rangefinder according to Claim 11, **characterized in that** the memory cells ($M_1$, $M_2$, $M_3$, $M_4$, $M_5$) are formed as digital counters.

13. Rangefinder according to any of Claims 9 to 12, **characterized by** an imaging optical system whose optical receiving power can be automatically adapted to the distance to the target (4) by means of an adjustable pupil setting in order to achieve, on average over all pixels (5), an optimised detectable radiation intensity.

14. Rangefinder according to any of Claims 8 to 13, **characterized in that** the radiation source (LA) is formed in such a way that the light pulses are variable in pulse shape and/or duration.

15. Rangefinder according to any of Claims 8 to 14, **characterized in that** the control and evaluation component is formed for determination of the position of a detected light pulse as a function of time by interpolation.

16. Rangefinder according to any of Claims 8 to 15, **characterized by** an imaging optical system whose depth of focus can be adapted to the distance to the target (4) for minimising the crosstalk between the pixels (5).

17. Rangefinder according to any of Claims 8 to 16, **characterized in that** a separate beam path for the emission and detection of the light pulses is assigned to each pixel (5), in particular comprising a beam splitter (3), a first micro lens array (6a) and a second micro lens array (6b).

## Revendications

1. Procédé de mesure de distances pour déterminer la dimension spatiale d'au moins une cible (4), comprenant au moins

    • l'émission d'une pluralité d'impulsions lumineuses, en particulier de lumière laser, sur la cible (4) ;
    • la détection des impulsions lumineuses rétrodiffusées par la cible (4) au moyen d'une pluralité de points d'image (5) de mesure de distance ;
    • la déduction d'une distance à la cible (4) pour chacun des points d'image (5),
    en particulier selon le principe du temps de vol des impulsions ;

    chaque impulsion lumineuse étant détectée à l'intérieur d'un intervalle de mesure ($T_i$) constitué d'au moins deux intervalles partiels ($t_{i,j}$), en particulier de même longueur,
    **caractérisé en ce**
    **que** la détection comporte une étape de détection répétée au moins une fois, réalisée en au moins deux étapes, l'intervalle de mesure ($T_i$) étant raccourci d'une étape à l'autre.

2. Procédé selon la revendication 1,
    **caractérisé en ce**
    **qu'**à partir de l'intervalle de mesure ($T_i$) de l'étape précédente respective (i), l'intervalle de temps constitué de l'intervalle partiel ($t_{i,max}$) présentant l'énergie lumineuse détectée la plus élevée et

    - de l'intervalle partiel immédiatement précédent dans le temps ($t_{i,max-1}$) ou
    - de l'intervalle partiel immédiatement suivant dans le temps ($t_{i,max+1}$) est choisi comme intervalle de mesure raccourci ($T_{i+1}$).

3. Procédé selon l'une des revendications précédentes,
    **caractérisé en ce**
    **que** la fréquence de répétition des impulsions lumineuses est augmentée d'une étape à l'autre.

4. Procédé selon l'une des revendications précédentes,
    **caractérisé en ce**
    **que** la durée maximale des impulsions lumineuses d'une étape à l'autre est adaptée aux intervalles partiels ($t_{i,j}$), en particulier limitée dans le temps par la durée d'un intervalle partiel ($t_{i,j}$).

5. Procédé selon l'une des revendications précédentes,
    **caractérisé en ce**
    **que** des distorsions de l'impulsion lumineuse rétrodiffusée, en particulier provoquées par des niveaux de signal trop élevés ou une lumière de fond, sont réduites en utilisant un modèle non linéaire pour l'allure de l'impulsion lumineuse détecté, en particulier selon

$$P_n = \exp\left( -\frac{1}{2}\frac{\eta_0 \cdot Q_r}{h\nu}\left[ erf\left(\frac{t-\tau}{\sqrt{2}\cdot\sigma_P}\right)+1\right] - t\cdot\eta_0\cdot E\right)$$

en fonction

- du temps t
- du retard $\tau$,
- de l'énergie d'impulsion $Q_r$,
- de la longueur d'impulsion $\sigma_p$,
- de l'intensité de la lumière de fond E,
- de l'efficacité quantique de détection $\eta_0$ et
- de l'énergie d'un photon $h\nu$.

6.  Procédé selon la revendication 5,
    **caractérisé en ce**
    **que** le retard r est déterminé à partir de $P_n$, en particulier par résolution d'un problème d'optimisation non linéaire, dans lequel

    - la longueur d'impulsion $\sigma_p$ est déterminée par une identification de système et

    - l'énergie d'impulsion $Q_r$ ou $\dfrac{\eta_0 \cdot Q_r}{h\nu}$ sont estimés conjointement avec le retard r et

    - l'intensité de la lumière de fond E ou $\eta_0 \cdot E$ sont déterminés soit par estimation, soit par une mesure séparée.

7.  Procédé selon l'une des revendications 5 ou 6,
    **caractérisé en ce**
    **qu'**à la dernière étape, l'impulsion lumineuse à détecter est centrée dans l'intervalle de mesure pour minimiser les erreurs des valeurs estimées de longueur d'impulsion $\sigma_p$ et de lumière de fond $E$ ou $\eta_0 \cdot E$, en particulier par interpolation à la dernière étape ou par une phase de mesure suivante.

8.  Appareil de mesure de distances pour déterminer la dimension spatiale d'au moins une cible, comprenant au moins

    • une source de rayonnement (LA) pour l'émission d'une pluralité d'impulsions lumineuses, en particulier de lumière laser, sur la cible (4) ;
    • un arrangement de points d'image (5) de mesure de distance pour la détection des impulsions lumineuses rétrodiffusées par la cible ;
    • un composant de commande et d'évaluation pour la déduction d'une distance à la cible pour chacun des points d'image (5), en particulier selon le principe du temps de vol des impulsions ;

    dans lequel au moins deux cellules de mémoire ($M_1$, $M_2$, $M_3$, $M_4$, $M_5$) sont associées à chaque point d'image (5), lesquelles enregistrent chacun un intervalle partiel ($t_{i,j}$) dans le temps, de sorte qu'un intervalle de mesure ($T_i$) soit couvert dans le temps,
    **caractérisé en ce**
    **que** les cellules de mémoire ($M_1$, $M_2$, $M_3$, $M_4$, $M_5$) sont couplées de telle sorte que la détection comporte une étape de détection répétée au moins une fois, réalisée en au moins deux étapes, l'intervalle de mesure ($T_i$) étant raccourci d'une étape à l'autre.

9.  Appareil de mesure de distances selon la revendication 8,
    **caractérisé en ce**
    **que** les points d'image (5) sont réalisés sous la forme de photodétecteurs linéaires, en particulier sous la forme de photogrilles, diodes PIN ou de photodiodes à avalanche.

10. Appareil de mesure de distances selon la revendication 9,
    **caractérisé en ce**
    **que** les cellules de mémoire ($M_1$, $M_2$, $M_3$, $M_4$, $M_5$) intègrent l'intensité lumineuse rétrodiffusée par la cible (4) des impulsions lumineuses pendant les intervalles partiels ($t_{i,j}$) associés, en particulier sont réalisées sous la forme de grilles de transfert de charge.

**11.** Appareil de mesure de distances selon la revendication 8,
**caractérisé en ce**
**que** les points d'image (5) sont réalisés sous la forme de détecteurs de photons uniques (SPAD).

**12.** Appareil de mesure de distances selon la revendication 11,
**caractérisé en ce**
**que** les cellules de mémoire ($M_1$, $M_2$, $M_3$, $M_4$, $M_5$) sont réalisées sous la forme de compteurs numériques.

**13.** Appareil de mesure de distances selon l'une des revendications 9 à 12,
**caractérisé par**
une optique de reproduction dont la performance de réception optique peut être adaptée automatiquement à la distance à la cible (4) au moyen d'un réglage de pupille variable pour atteindre en moyenne sur tous les points d'image (5) une intensité de rayonnement détectable optimisée.

**14.** Appareil de mesure de distances selon l'une des revendications 8 à 13,
**caractérisé en ce**
**que** la source de rayonnement (LA) est conçue de telle sorte que les impulsions lumineuses soient modifiables en ce qui concerne la forme d'impulsion et/ou la durée.

**15.** Appareil de mesure de distances selon l'une des revendications 8 à 14,
**caractérisé en ce**
**que** le composant de commande et d'évaluation est conçu pour déterminer par interpolation la position dans le temps d'une impulsion lumineuse détectée.

**16.** Appareil de mesure de distances selon l'une des revendications 8 à 15,
**caractérisé par**
une optique de reproduction dont la profondeur de champ peut être adaptée à la distance à la cible (4) pour minimiser la diaphonie entre les points d'image (5).

**17.** Appareil de mesure de distances selon l'une des revendications 8 à 16,
**caractérisé en ce**
**qu'**à chaque point d'image (5) est associé un chemin optique distinct pour l'émission et la détection des impulsions lumineuses, en particulier avec un diviseur de faisceau (3), un premier réseau de microlentilles (6a) et un deuxième réseau de microlentilles (6b).

Fig. 1a

Fig. 1b

Fig. 1c

Fig. 2

Fig. 3

Fig. 4

Fig. 5

Fig. 6

Stufe 1

Stufe 2

Stufe 3

$R_{max}$   $2R/c$

$T_1$

$d_1$

$0$   $t_{1,1}$   $t_{1,2}$   $t_{1,3}$   $t_{1,4}$   $t_{1,5}$

$R_{max}$   $2R/c$

$T_2$

$d_2$

$t_{2,1}$   $t_{2,2}$   $t_{2,3}$   $t_{2,4}$   $t_{2,5}$

$2R/c$

$T_3$

$d_3$

$t_{3,1}$   $t_{3,2}$   $t_{3,3}$   $t_{3,4}$   $t_{3,5}$

$2R/c$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4440613
- DE 19704496
- US 6115112 A
- US 6535275 B2
- DE 10162668 A1
- WO 9740342 A

**In der Beschreibung aufgeführte Nicht-Patentliteratur**

- **BRIAN AULL.** 3D Imaging with Geiger-mode Avalanche Photodiodes. *Optics & Photonics News,* Mai 2005, 42ff
- **C. NICLASS ; A. ROCHAS ; P.A. BESSE ; E. CHARBON.** A CMOS 3D Camera with Millimetric Depth Resolution. *IEEE Custom Integrated Circuits Conference,* Oktober 2004, 705-708
- **M. ROHNER et al.** Single-Photon Detection for High Precision Ranging - A Trade-off Study. *First Range Image Research Day,* 2005